# EUROPEAN PATENT APPLICATION

(11) **EP 2 792 532 A1**
(43) Date of publication of application: **22.10.2014**
(21) Application number: 13163876.9
(22) Date of filing: 16.04.2013
(51) Int. Cl.: B60L 3/10, B60L 15/20, B60W 10/08

(54) **Preventing of slip in an electrically powered vehicle**

(71) Applicant: ABB Oy, 00380 Helsinki (FI)
(72) Inventor: Talja, Markku, 00380 Helsinki (FI)
(74) Representative: Kolster Oy Ab

(57) **Abstract**

A method and an arrangement for limiting slip in a wheeled vehicle having two or more driving wheels that are operated with electric motors, the method comprising determining a speed (v1, v2, v3, v4) of each of the driving wheels, determining the highest speed (vmax) of the driving wheels, determining the lowest speed (vmin) of the driving wheels, defining a first speed tolerance (v1) and a second speed tolerance (v2), setting an upper limit (vhigh) for the speed by adding the first speed tolerance (vt1) to the determined lowest speed (vmin), setting a lower limit (vlow) for the speed by subtracting the second speed tolerance (vt2) from the determined highest speed (vmax), and for each driving wheel, limiting the accelerating torque or decelerating torque when the speed of the wheel in question is higher than the set upper limit (vhigh) for the speed during acceleration and when the speed of the wheel in question is lower than the set lower limit (vlow) for the speed during deceleration.

## Description

### FIELD OF THE INVENTION

The invention relates to preventing of slip, and particularly to preventing slip in a vehicle having electrically driven wheels.

### BACKGROUND OF THE INVENTION

It is known that driving conditions vary due to different road surfaces and weather conditions. Roads may get wet, snowy and icy, and as a result of which the grip under the wheels of a vehicle changes. For the purpose of keeping the traction and braking force at their maximum, torque applied to the wheels should be adapted to be as close as possible to the value depending on the weather conditions.

It is a known problem in wheeled vehicles that wheels of the vehicles may lose grip on the surface. Loss of grip may occur during acceleration of the vehicle or during deceleration of the vehicle. When the wheels are slipping during acceleration, the body speed of the vehicle does not increase together with the increasing rotational speed of the wheels. In some cases, control that prevents wheels from losing grip when accelerating is referred to as traction control.

In deceleration or braking of a vehicle, slip occurs when the wheels of the vehicle lose grip on the surface and rotate slower than the body speed. Typically, this may lead to a situation in which the wheels are locked and the vehicle still moves. In vehicles, control that prevents slip in deceleration is referred to as ABS system ("Antiblockiersystem" or "anti-lock braking system"). This system effectively keeps the wheels in rotation during braking and maintains the grip between the wheel and the surface, enabling the steering of the vehicle even during heavy deceleration.

In electrically powered vehicles each driving wheel may comprise its own electric motor and corresponding systems for driving the motor. The system for driving the motor typically comprises an inverter, which produces an alternating voltage from a DC voltage source of the vehicle and supplies it to the motor. As is known, inverters can control electric motors precisely, and the torque produced by the motor can be controlled.

In known electrically driven wheeled vehicles, preventing of slip is carried out by limiting the torque when slip is detected, and then returning the torque back to its original value. This may lead to a repetitive decrease and increase of torque, and the optimal accelerating or braking force may not be reached.

For comfort and efficiency of the driving, some slip should, however, be allowed. For example, one or more of the driving wheels may have differing grips, and when accelerating in such a situation, some slip should be allowed at least for one of the wheels. Similarly during braking, the wheels may rotate differently with respect to each other due to differing surface conditions between the wheels. This is to say that although slip is controlled, some flexibility should be allowed between the speeds of the driving wheels.

### BRIEF DESCRIPTION OF THE INVENTION

An object of the present invention is to provide a method and an arrangement for implementing the method to overcome the above problem. The object of the invention is achieved by a method and an arrangement which are characterized by what is stated in the independent claims. The preferred embodiments of the invention are disclosed in the dependent claims.

The invention is based on the idea of separately limiting the accelerating or decelerating torques of each of the driving wheels of a vehicle when the speed of a wheel differs from the speed of the other wheels. That is to say, the speed of each of the driving wheels is determined, and when the speed of a wheel differs from the speeds of the other wheels, the torque is limited such that the speeds are balanced.

Since the method of the invention allows some slip in acceleration and deceleration still keeping the speed of the driving wheels close to the body speed of the vehicle, the obtained grip is close to the optimum.

### BRIEF DESCRIPTION OF THE DRAWINGS

In the following the invention will be described in greater detail by means of preferred embodiments with reference to the attached drawings, in which
Figures 1 and 2 show flowcharts of an embodiment of the invention, and
Figure 3 shows an example of a control system.

### DETAILED DESCRIPTION OF THE INVENTION

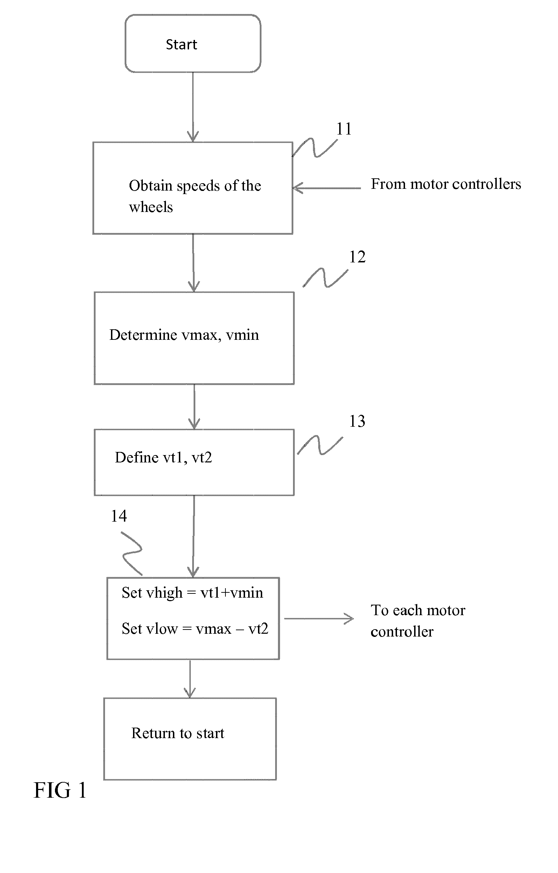

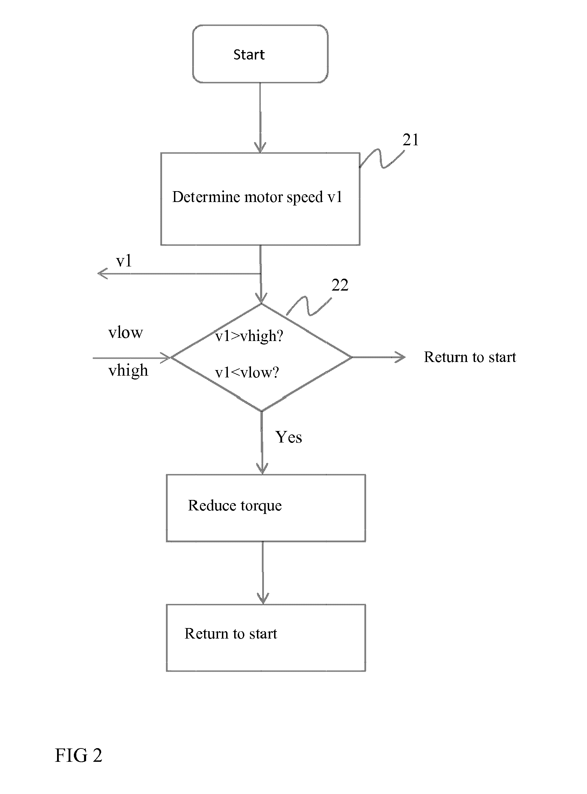

Figures 1 and 2 show flowcharts of an embodiment of the invention. Figure 1 shows the process common to each of the driving wheels, whereas Figure 2 shows a flowchart relating to one of the driving wheels. Flowcharts for other driving wheels would be similar to that presented in Figure 2, and therefore they are omitted. In the example of Figures 1 and 2, it is considered that a wheeled vehicle, such as a car, has four driving wheels and each of the driving wheels is powered by a separate combination of an inverter driven motor.

In the method, speeds v1, v2, v3, v4 of the wheels are obtained in block 21. The speeds may be obtained as rotational speeds or linear speeds and can be converted to one that is more suitable for processing. The rotational speeds are typically readily available from the control systems of each of the inverters driving the motors. The linear speed of the wheel can be calculated after the radius of the wheel is known.

After the speeds of the wheels are obtained, the maximum value vmax and the minimum value vmin of these speeds are determined in block 12. The maximum value vmax of the speeds is the value of the speed of the wheel having the highest instantaneous speed. Correspondingly, the minimum value vmin is the speed of the wheel that is rotating at the lowest speed at that instant.

In block 13, a first speed tolerance vt1 and a second speed tolerance vt2 are defined. The speed tolerances may be constant values that define the allowable difference in speeds between the wheels. The first speed tolerance vt1 relates to the upper limit of the speed of each of the wheels and the second speed tolerance vt2 relates to the lower limit of the speed of each of the wheels.

After the speed tolerances are defined, the upper limit vhigh for the speed of each of the driving wheels is set by adding the first speed tolerance vt1 to the determined lowest speed vmin in block 14. Similarly, the lower limit vlow for the speed of each of the driving wheels is set by subtracting the second speed tolerance vt2 from the determined highest speed vmax.

After the upper and lower limits are set in block 14, these values are communicated to each motor controller. The operation of a motor controller presented in Figure 2 is parallel to that of the flowchart of Figure 1. Each motor controller determines the speed of the wheel that is controlled by said controller. That is to say, the inverter or a similar motor controller determines the rotational speed of the motor. The speed is typically determined without separate speed sensors directly from the control system of the motor, however, drives with sensors are also applicable. The determined speed v1 is communicated to the flowchart of Figure 1, i.e. to a process that calculates the speed limits.

A comparison element 22 receives the upper and lower limits for the speed, and compares these limits with the actual speed of the wheel in question. If the actual speed v1 is higher than the upper limit vhigh, then the wheel in question rotates at a higher speed than what is allowed by the system. Since the calculation of the upper limit is based on the lowest speed of the wheels, it can be determined that the wheel in question is slipping. The magnitude of allowed speed difference between the lowest and the highest rotational speed is set by the first speed tolerance vt1. Further, the first speed tolerance relates to accelerating the vehicle.

After it is determined that the speed of a wheel is higher than the upper limit, the torque produced by the motor connected to that wheel is reduced. The limiting of the torque may be carried out by limiting the output of the torque controller such that the speed of the wheel decreases to a value allowed by the control. The output of the torque controller in the inverter driving the motor may produce a frequency reference for the modulator, and thus when the output of the torque controller is limited, the rotational speed of the motor drops quickly to allowable limits. Once back within allowable limits, the torque may be applied again. The reduction and increase of torque can be carried out by using an RC circuit having a time constant, which changes the torque in a controlled fashion. The torque may also be limited by using a ramp or even a stepwise change until the speed of the wheel is below the upper limit.

If the speed is lower than the lower limit, the decelerating torque is reduced in a similar fashion. That is to say, when during braking or decelerating the vehicle the wheel rotates too slowly, the decelerating torque is reduced and thereby the wheel is allowed to rotate.

The operation is described above in connection with only one wheel. In the invention, the same operations are carried out for each driving wheel continuously. That is to say, for each driving wheel, the controller of that wheel receives the upper and lower speed limits and controls the torque of the motor depending on the speed of the wheel (motor) and the limits for the speed. As the control is operated for each wheel and the speeds of the wheels change during the control, the highest and lowest speeds of the wheels change and therefore also the upper and lower limits change continuously.

According to an embodiment, the speed tolerances vt1 and vt2 are calculated as a function of body speed of the vehicle. For that purpose, the speed of the body of the vehicle is required to be known. The speed of the body of the vehicle means the travel speed of the actual vehicle. The body speed may be obtained from the non-driving wheels which rotate freely with the vehicle or from a speed radar or some other equipment incorporated in the body of the vehicle. The body speed may also be obtained from the driving wheels when the torque of a wheel that is slipping is reduced beyond a limit in which the driving wheel is not actively producing torque. The wheel then becomes passive with respect to driving the vehicle and its rotational speed corresponds to the travel speed of the vehicle. When the speed of such a free-running wheel is known, the selector of the minimum value used in the method produces a speed value corresponding to the travel speed.

When the speed tolerances vt1 and vt2 are calculated on the basis of the body speed of the vehicle, especially at a low speed during deceleration or braking of the vehicle, the second speed tolerance vt2 is reduced to a value close to zero. This is due to the fact that the wheels should not be locked during braking of the vehicle. Thus, when the body speed of the vehicle decreases below a certain limit, the second speed tolerance is gradually reduced for maintaining the controllability of the vehicle. Further, when accelerating at high speeds, it may be advisable to reduce the first speed tolerance vt1 for maintaining the controllability of the vehicle at high speeds.

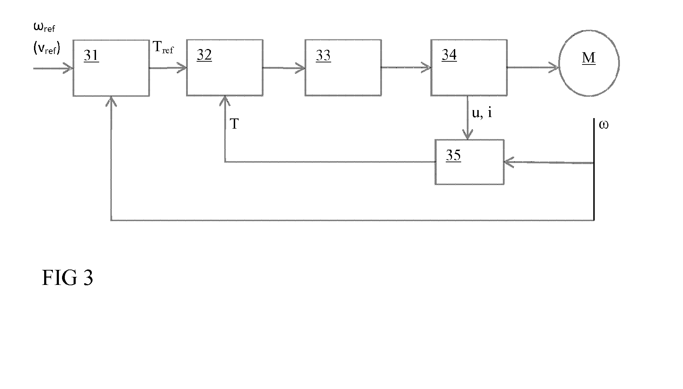

One possible control structure for controlling the electrical motor of each wheel is presented in Figure 3. Figure 3 shows a simplified typical and known controller structure for driving the motor that rotates the wheel. In this controller structure, a speed command or reference v_{ref} is given to the motor. The speed reference is given by the user of the vehicle either directly or via some processing circuits. The speed reference is compared with the actual speed v of the vehicle in a speed controller 31. A torque reference T_{ref} from the speed controller 31 is outputted to a torque controller 32 which also receives an estimated value of torque T. The output of the torque controller 32 is further processed and led to a modulator 33 which gives the control signals to controlled semiconductor switches of an inverter 34. The processing of the output of the torque controller 32 may comprise controlling the currents of the inverter. Further, the currents i and voltages u of the motor and the rotational speed w of the motor are typically measured or estimated, and the torque T is estimated and used in the controllers. In Figure 3, the torque of the motor is estimated in an estimation block 35. In the estimation, a motor model together with the measurements are used for obtaining a value representing the torque T. It is shown in Figure 3 that the speed controller may receive an angular speed reference or a speed reference. It is known that once the radius of a rotating wheel is known, the angular speed can be calculated from the linear speed and vice versa.

The control system is provided for each driving wheel, and each of these separate control systems receives the same speed reference. When the torque is required to be limited, the torque controller 2 may comprise the controllable limits which limit the output of the controller. The controllable limits may also be realized by limiting the output of the torque controller with a separate limiter system.

It will be obvious to a person skilled in the art that, as the technology advances, the inventive concept can be implemented in various ways. The invention and its embodiments are not limited to the examples described above but may vary within the scope of the claims.

## Claims

1. A method for limiting slip in a wheeled vehicle having two or more driving wheels that are operated with electric motors, the method comprising
determining a speed (v1, v2, v3, v4) of each of the driving wheels,
determining the highest speed (vmax) of the driving wheels,
determining the lowest speed (vmin) of the driving wheels,
defining a first speed tolerance (v1) and a second speed tolerance (v2),
setting an upper limit (vhigh) for the speed by adding the first speed tolerance (vt1) to the determined lowest speed (vmin),
setting a lower limit (vlow) for the speed by subtracting the second speed tolerance (vt2) from the determined highest speed (vmax), and
for each driving wheel, limiting the accelerating torque or decelerating torque when the speed of the wheel in question is higher than the set upper limit (vhigh) for the speed during acceleration and when the speed of the wheel in question is lower than the set lower limit (vlow) for the speed during deceleration.

2. A method according to claim 1, wherein the method comprises the step of
determining the body speed (vbody) of the vehicle, and the defining of the first speed tolerance and the second speed tolerance comprises defining the first and second speed tolerances (vt1, vt2) on the basis of the determined body speed (vbody) of the vehicle.

3. A method according to claim 1 or 2, wherein the limiting of the accelerating torque or decelerating torque comprises limiting the output of a torque controller of a controller controlling the electric motor.

4. A method according to claim 1, 2 or 3, wherein the limiting of the accelerating torque or decelerating torque is carried out by using a time constant.

5. A method according to any one of the previous claims 1 to 4, wherein the accelerating torque is limited until the speed of the wheel in question is lower than the set upper limit for the speed and the decelerating torque is limited until the speed of the wheel in question is higher than the lower limit for the speed.

6. An arrangement for limiting slip in a wheeled vehicle having two or more driving wheels that are operated with electric motors, the arrangement comprising
means for determining a speed (v1, v2, v3, v4) of each of the driving wheels,
means for determining the highest speed (vmax) of the driving wheels,
means for determining the lowest speed (vmin) of the driving wheels,
means for defining a first speed tolerance (v1) and a second speed tolerance (v2),
means for setting an upper limit (vhigh) for the speed by adding the first speed tolerance (vt1) to the determined lowest speed (vmin),
means for setting a lower limit (vlow) for the speed by subtracting the second speed tolerance (vt2) from the determined highest speed (vmax), and
for each driving wheel, means for limiting the accelerating torque or decelerating torque when the speed of the wheel in question is higher than the set upper limit (vhigh) for the speed during acceleration and when the speed of the wheel in question is lower than the set lower limit (vlow) for the speed during deceleration.
